# EUROPÄISCHE PATENTSCHRIFT

(11) **EP 1 310 340 B1**
(45) Veröffentlichungstag und Bekanntmachung des Hinweises auf die Patenterteilung: **25.04.2007**
(21) Anmeldenummer: 02405963.6
(22) Anmeldetag: 08.11.2002
(51) Int. Cl.: B28D 7/02, B23D 59/00, B23Q 11/00

(54) **Schneidmaschine**
Cutting machine
Machine de coupe

(30) Priorität: 09.11.2001 CH 20012056
(43) Veröffentlichungstag der Anmeldung: 14.05.2003
(73) Patentinhaber: Ambühl, Jost M., 8240 Thayngen (CH)
(72) Erfinder: Ambühl, Jost M., 8240 Thayngen (CH)
(74) Vertreter: Breiter, Heinz

(56) Entgegenhaltungen:
- EP-A- 0 596 832
- WO-A-89/10235
- DE-B- 2 162 928
- DE-U- 9 400 842
- GB-A- 2 061 184
- US-A- 4 063 478
- PATENT ABSTRACTS OF JAPAN vol. 1999, no. 09, 30. Juli 1999 (1999-07-30) -& JP 11 114950 A (HTC:KK), 27. April 1999 (1999-04-27)
- PATENT ABSTRACTS OF JAPAN vol. 1999, no. 09, 30. Juli 1999 (1999-07-30) -& JP 11 114945 A (HTC:KK), 27. April 1999 (1999-04-27)

## Beschreibung

Die Erfindung bezieht sich auf eine Schneidmaschine gemäß dem Oberbegriff von Anspruch 1. Eine solche Maschine ist aus der JP 11114945 bekannt.

Schneidmaschinen, auch Trennmaschinen genannt, werden insbesondere auf Baustellen verwendet, wo Verbundsteine, Platten zum Verlegen, Treppenstufen usw. an Ort zugeschnitten und verlegt werden. Ebenso müssen Keramikplatten auf der Baustelle zugeschnitten werden, wenn sie mit exaktem Mass verlegt werden wollen, auch im Innenbereich.

Diese Schneidmaschinen müssen einfach gebaut, problemlos zu bedienen und zu transportieren sein. Bei allen Ausführungsformen ist zu beachten, dass sowohl dünne Verlegeplättchen von Badezimmern als auch grobe Backsteine für Rohmauern zugeschnitten werden müssen.

Alle grösseren Steinschneidmaschinen auf einer Baustelle und industriell eingesetzten Steinschneidmaschinen haben ein Merkmal gemeinsam: Die Trennscheiben werden mit fliessendem Wasser gekühlt, welches auch den Schneidestaub wegschwemmt und so zur dünnflüssigen Schlämme wird. Diese wird durch eine Wasserpumpe oder einen direkten Wasseranschluss zirkuliert. Das Wasser sowie die Schlämme werden einer Wasserwanne mit Spritzschutz zugeführt.

Üblicherweise liegen die Werkstücke in Plattenform vor und können auf dem Schneidetisch liegend rechtwinklig zugeschnitten werden. Es sind auch Schneidmaschinen in zahlreichen Ausführungsformen bekannt, mit welchen auf Gehrung geschnitten werden kann, indem die Trennscheibe oder der Auflagetisch im entsprechenden Winkel eingestellt und fixiert werden.

Bei kleineren Handmaschinen wird nach bekannten Ausführungsformen auf das von Staub reinigende Kühlwasser verzichtet. Dies wirkt sich insbesondere bezüglich der Arbeitsplatzhygiene aus, je nach dem Material des Werkstücks und der Leistungsfähigkeit der Schneidmaschine entstehen für den Arbeiter unangenehme bis schädigende Staubwolken, welche sich auch auf die Umgebung nachteilig auswirken können.

Der Erfinder hat sich deshalb die Aufgabe gestellt, ein Verfahren und eine Vorrichtung der eingangs genannten Art zu schaffen, welche ohne aufwendige, gleichzeitig reinigende Systeme mit Kühlwasser auskommen und dennoch das Problem der Staubentwicklung auf einfache, kostensparende Weise lösen, ohne die Leistungsfähigkeit zu beeinträchtigen.

Die Aufgabe wird erfindungsgemäss durch eine Schneidmaschine nach Patentanspruch 1 gelöst. Spezielle und weiterbildende Ausführungsformen sind Gegenstand von abhängigen Patentansprüchen.

Je nach Ausführungsform ist die Schutzhaube oberhalb, die Staubwanne unterhalb des Arbeitsbereichs angeordnet. Zweckmässig sind Trennscheibe und Auflagetisch relativ zueinander verschiebbar. Wenn beide unverschiebbar sind, kann das Werkstück auf dem Auflagetisch verschoben werden.

Bereits ein verhältnismässig geringer Unterdruck in der Staubwanne oder in der Staubwanne und in der Schutzhaube verhindert einen störenden Staubaustritt, wenn der Längsschlitz für die Trennscheibe beidseits einen entsprechend geringen Abstand von ihr hat. Derart kann ein hinreichender Unterdruck aufgebaut werden, überdies steht die über den Schlitz einströmende Luft einem Austritt der feinkörnigen Staubpartikel entgegen. In der Praxis liegt der Abstand der Trennscheibe vom betreffenden Längsschlitz beidseits vorzugsweise bei höchstens einem Viertel der maximalen Dicke der im Schlitz befindlichen Trennscheibe. Diese Dicke liegt zweckmässig im Bereich von 3 bis 8 mm, der beidseitige Abstand beträgt bevorzugt 0,5 bis 2 mm.

Zur Erzeugung eines hinreichenden Unterdrucks kann es zweckmässig sein, die längslaufende Öffnung von einem Dichtungsmedium weiter zu verengen, beispielsweise mit einem Stahlblech, einer Dichtungslippe aus Kunststoff oder Bürsten. Im Extremfall kann dieses Dichtungsmedium auf der Trennscheibe schleifen. Die in der Regel auswechselbaren Dichtungsmedien werden so ausgewählt, dass fallweise ein optimaler Unterdruckaufbau erfolgen kann.

Bei einem hinreichenden Unterdruck können in der Schutzhaube und/oder in der Staubwanne Strömungsgeschwindigkeiten von z.B. 10 bis 30 m/sec erreicht werden, wobei eine Luftmenge von beispielsweise 250 bis 1000 m³/h umgesetzt wird. Trennscheiben von 200 mm Durchmesser arbeiten in der Regel bei niedrigeren Strömungsgeschwindigkeiten und kleineren Luftdurchsätzen als grössere Trennscheiben, welche je nach Maschinentyp einen Durchmesser bis z.B. 900 mm haben. Der Unterdruckaufbau in der Schutzhaube und in der Staubwanne erfolgt zweckmässig durch einen gemeinsamen Industriestaubsauger mit entsprechender Leistungsfähigkeit und einem gemeinsamen Druckschlauch. Es kann zweckmässig sein, in der Schutzhaube oder in der Staubwanne mittels Ventilen unterschiedliche Unterdruckverhältnisse zu schaffen, bzw. die Schutzhaube bei Normaldruck zu belassen.

Die Trennscheibe besteht wenigstens im peripheren Bereich aus gehärtetem, hochwertigem Stahl. Bevorzugt sind die Segmente bzw. Schneidezähne mit Hartmetall, Keramik oder Diamant beschichtet. Diamanttrennscheiben haben zweckmässig lasergeschweisste oder gesinterte Diamantkörner. Die Beschichtung kann mit Plättchen, jedoch auch in Form von chemischen und/oder physikalischen Schichtablagerungen oder einer härtenden Oberflächenbehandlung erfolgen. In diesem Bereich kann der längslaufende Schlitz für die Trennscheibe etwas breiter ausgebildet sein, entsprechend einer breiteren Konstitution der Trennscheibe in diesem Bereich.

Die Trennscheibe ist vorzugsweise höhenverstellbar, manuell oder maschinell, letzteres auch programmgesteuert. Im Rahmen der vorliegenden Erfindung ist die Trennscheibe vorzugsweise so eingestellt, dass deren Umfang die untere Begrenzungsfläche des Plankenrostes oder der Auflageplatte erreicht, oder von dieser nach unten einen Abstand von bis 10 mm, insbesondere bis 5 mm, hat.

Nach der Erfindung vergrössert sich der Querschnitt der Staubwanne kontinuierlich in Richtung des Absaugstutzens der Wanne. Der Querschnitt der Staubwanne hat eine im wesentlichen kegel- oder pyramidenstumpfförmige Ausbildung, welche parallel zur Längsachse abgeschnitten und auf der Unterseite des in Richtung des Schlitzes verschiebbaren Arbeitstisches befestigt ist. Durch die in Längsrichtung des Schlitzes ändernde Querschnittsausbildung der Staubwanne werden günstigere Strömungsverhältnisse zur Staubbeseitigung geschaffen. Die Strömungsgeschwindigkeit wird in Richtung der Absaugung immer kleiner.

Eine im wesentlichen kegelstumpfförmige Staubwanne, welche parallel zur Längsachse aufgehängt ist, erweitert sich seitlich und unten in gleichem Masse. Eine im wesentlichen pyramidenstumpfförmig ausgebildete Staubwanne hat einen in Richtung des Absaugstutzens absinkenden Boden, und in gleicher Richtung auseinanderlaufende Seitenwände.

Die erfindungsgemässe Lösung ist nicht nur für neue Schneidmaschinen verwendbar, sie kann auch zur Umrüstung von bereits im Einsatz befindlichen Schneidmaschinen eingesetzt werden. Die Zusatzkosten für die Erstausrüstung bzw. die Umrüstung werden wenigstens teilweise ausgeglichen durch nicht mehr notwendige Installationen für reinigendes Kühlwasser, ein grosses Auffangbecken und eine Spritzschutzhaube eingeschlossen. Alle erfindungsgemässen Schneidmaschinen sind in der Regel auf einer Baustelle im Einsatz, sie können jedoch auch im Werkstattbetrieb eingesetzt werden.

Die Trennscheibe der erfindungsgemässen Schneidmaschine kann neben dem üblichen Trennen auch zum Einschneiden von Nuten in Werkstücke verwendet werden. Dies bedeutet in der Praxis das Anbringen einer Trennlinie, es wird eine Soll-Bruchlinie ausgespart, welche ähnlich wie beim Anritzen von Glas funktioniert. Mit einem leichten Schlag kann beispielsweise ein Stück einer Platte sauber abgetrennt werden. Bei dieser speziellen Einsatzweise bleibt die Staubwanne ausser Funktion.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine perspektivische Ansicht einer Schneidmaschine nach dem Stand der Technik,
- Fig. 2 eine ebenfalls bekannte Weiterentwicklung gemäss Fig. 1,
- Fig. 3 eine Ansicht einer Trennscheibe,
- Fig. 4 eine perspektivische Ansicht einer Schutzhaube mit Trennscheibe gemäss einer Variante der vorliegenden Erfindung,
- Fig. 5 eine Ansicht von unten einer Schutzhaube mit Trennscheibe,
- Fig. 6 ein Teilschnitt VI - VI gemäss Fig. 5,
- Fig. 7 einen Teilschnitt eines Auflagetischs mit Staubwanne,
- Fig. 8 einen Teilschnitt durch ein plattenförmiges Werkstück mit einer Nut,
- Fig. 9 die sich in Richtung eines Absaugstutzens kontinuierlich vergrössernde Staubwanne gemäss Fig. 7.
- Fig. 10 verschiedene Querschnittsvarianten der Staubwanne gemäss IX - IX in Fig. 9, und
- Fig. 11 eine Draufsicht auf einen Auflagetisch mit angedeuteter Staubwanne.

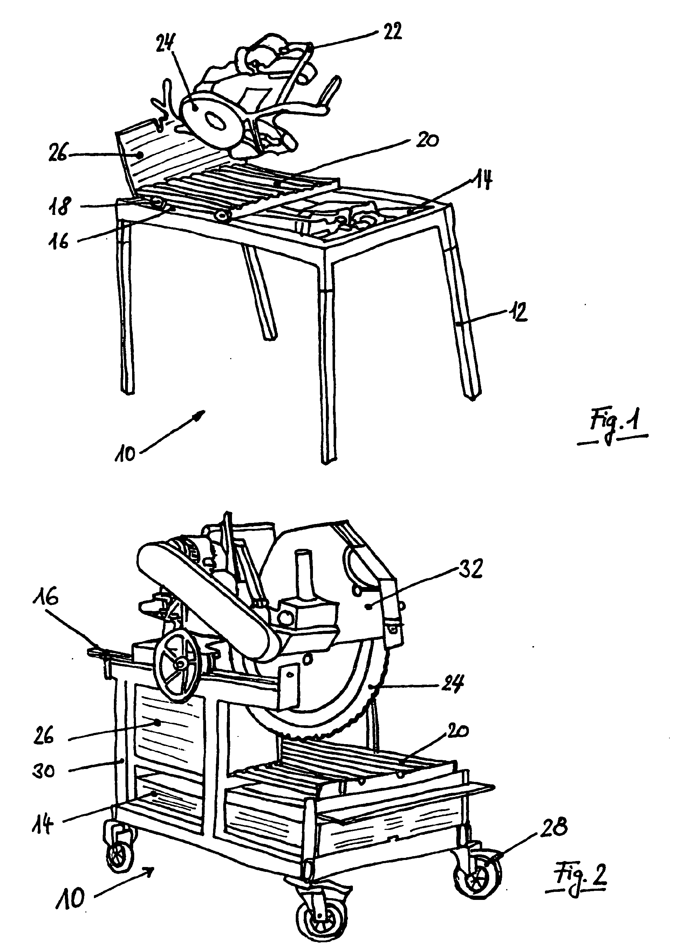

Fig. 1 zeigt eine für den Einsatz auf einer Baustelle geeignete einfache Schneidmaschine 10 mit Möglichkeiten zum Gehrungsschnitt, welche mit Bezug auf ihr Gewicht und ihre Abmessungen bequem transportierbar ist. Auf vier höhenverstellbaren Beinen 12 ist eine stabile Wanne 14 montiert, welche der Aufnahme des Kühlwassers mit dem Schneidestaub dient. Auf der Wanne 14 sind Führungsschienen 16 für einen Auflagetisch 20 mit Rollen 18 montiert. Weiter ist an der Wanne 14 ein kippbarer Rahmen 22 mit einer Trennscheibe 24 befestigt, welche motorisch angetrieben ist. Im Übrigen erfolgt der Schneidevorgang manuell. Schliesslich umfasst die Schneidmaschine 10 noch einen Spritzschutz 26.

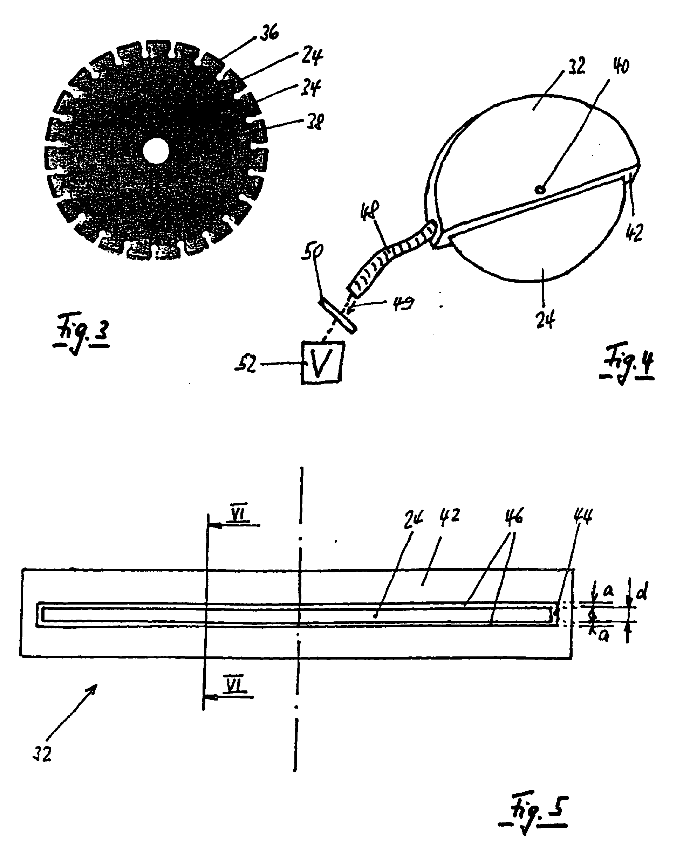

Eine weiterentwickelte Ausführungsform einer Schneidmaschine 10 gemäss Fig. 2 umfasst im wesentlichen gleiche oder äquivalente Bauteile wie Fig. 1. Die Maschine ist auf Lenkrollen 28 mit Feststellbremse gelagert. Die Wanne 14 mit dem staubbeladenen Kühlwasser ist als Einschubelement ausgestaltet. Der aus einem metallischen Lattenrost bestehende Auflagetisch 20 ist im vorliegenden Fall fest am Maschinenrahmen 30 fixiert. Die ebenfalls am Maschinenrahmen 30 montierten Führungsschienen 16 dienen dem Vorschub der Trennscheibe 24, welcher wie gezeichnet manuell, aber auch motorisch erfolgen kann. Die Höhe der mit einer Schutzhaube 32 versehenen Trennscheibe 24 ist ebenfalls manuell oder unter Verwendung bekannter Mittel einstellbar. Nach einer nicht dargestellten Variante kann auch der Auflagetisch 20 längsverschiebbar sein, wobei die Trennscheibe 24 mobil bleibt oder in einer festen Position montiert ist.

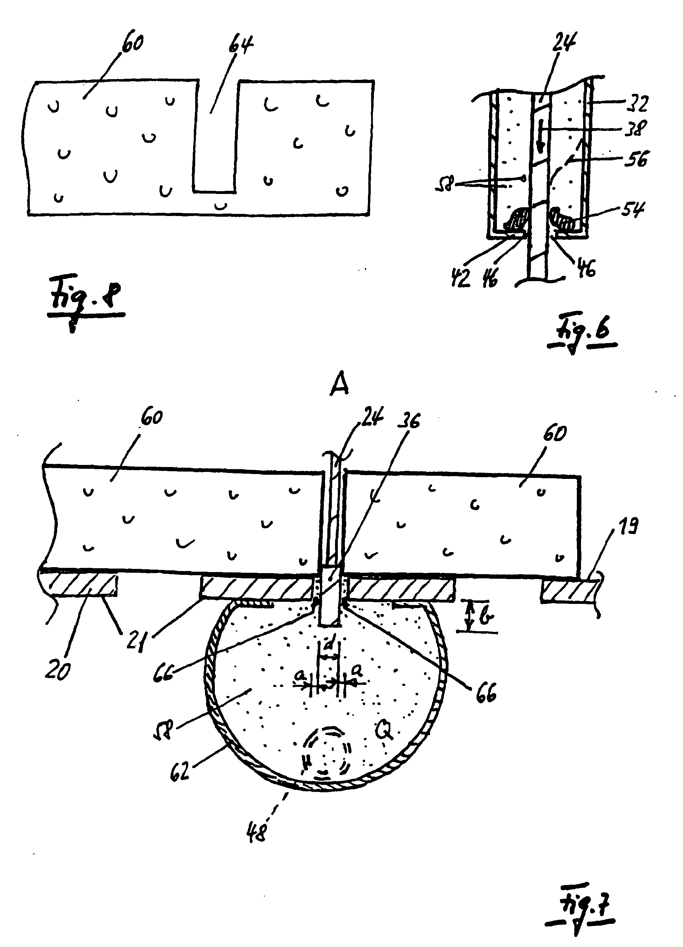

In Fig. 3 ist eine an sich bekannte Trennscheibe 24 für eine Schneidmaschine 10 (Fig. 1, 2) dargestellt. Die Schneidezähne 34 sind mit peripheren Schutzschichten 36 aus harten, verschleissfesten Werkstoffen, beispielsweise Wolframcarbid, Titannitrid oder Industriediamanten, ausgerüstet. Die Trennscheibe 24 muss in einem festgelegten Drehsinn montiert werden, was mit einem Pfeil 38 angedeutet ist.

Die erfindungsgemäss ausgestaltete Schneidmaschine 10 für Werkstoffe aus Naturstein, Kunststein oder Keramik basiert bezüglich des Maschinenrahmens 30, des Auflagetisches 20, der motorisch angetriebenen Trennscheibe 24 und deren Halterung und Führung auf bekannten Ausführungsformen, wie sie beispielsweise in Fig. 1 und 2 gezeigt sind. Jedoch entfallen erfindungsgemäss die mit der Wasserkühlung zusammenhängenden Bauelemente, wie z.B. eine Wanne 14 und ein Spritzschutz 26. Die erfindungsgemässen Schneidmaschinen sind mit einem trockenen Absaugsystem ausgerüstet, welches Schneidestaubemissionen verhindert.

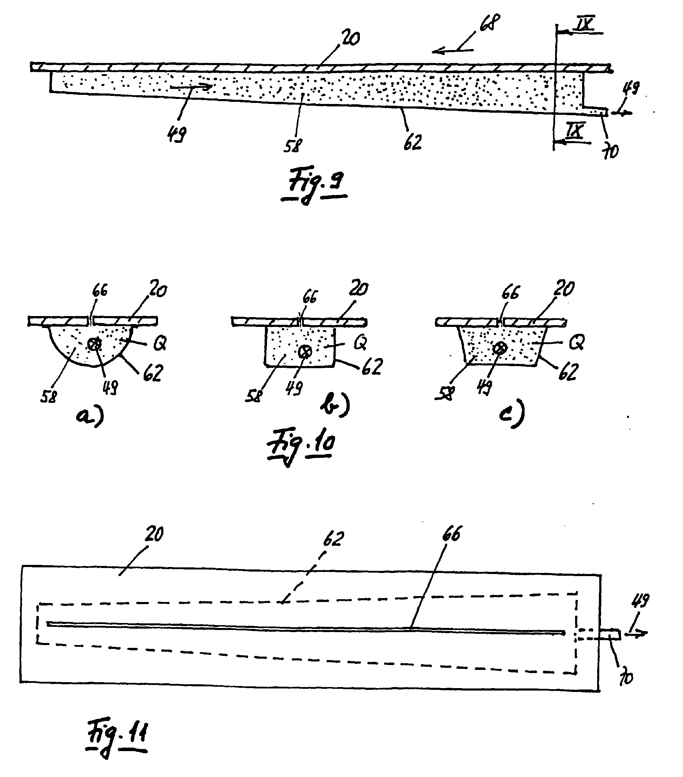

Fig. 4 zeigt eine Schutzhaube 32 mit einer Trennscheibe 24. Diese ist über eine Welle 40 in der Schutzhaube 32 gelagert, wobei deren Öffnung mit einem Dichtungsblech 42 weitgehend verschlossen ist. Die Schutzhaube 32 ist in der Praxis meist nicht mit einer Absaugeinrichtung ausgerüstet oder es kann nach einer nicht dargestellten Variante eine lappenförmige Staubdichtung angebracht sein.

Wie in Fig. 5 im Detail dargestellt, bleibt für die Trennscheibe 24 eine längslaufende Öffnung 44, welche zwischen dem Dichtungsblech 42 und der Trennscheibe 24 einer Dicke d von etwa 7 mm beidseits geringe Spielräume 46 einer Breite a von etwa 1 mm offen lässt. Sowohl die Schutzhaube 32 als auch das Dichtungsblech 42 können aus Metall oder Kunststoff bestehen.

An eine periphere Öffnung in der Schutzhaube 32 schliesst ein Absaugstutzen mit übergestülptem Unterdruckschlauch 48 zur Erzeugung eines Unterdrucks in der Schutzhaube 32 und zum Abtransport des Schneidestaubs (58, Fig. 6 - 10) an. Der beladene Luftstrom 49 im Schlauch 48 führt, wie mit einer punktierten Linie angedeutet, über ein Staubfilter 50 zu einem Industriestaubsauger 52. Die Reinigung des Staubfilters 50 sowie das Sammeln und die Weiterverarbeitung bzw. Entsorgung des Schneidestaubs erfolgen in üblicher Weise.

Eine in Fig. 6 teilweise gezeigte Schutzhaube 32 ist einstückig mit dem Dichtungsblech 42 ausgebildet, indem dieses im Falle eines metallischen Werkstoffes abgebogen, im Falle von Kunststoff abgewinkelt gespritzt ist. Die Drehrichtung der Trennscheibe 24 ist wiederum mit dem Pfeil 38 angedeutet. Die beiden Spielräume 46 zwischen Trennscheibe 24 und Abdeckblech 42 sind mit Dichtungslippen 54 aus einem elastischen, gut gleitenden Material weitergehendst oder vollständig verschlossen. Nach anderen Ausführungsformen werden anstelle von Dichtungslippen 54 auswechselbare Bürsten oder dgl. eingesetzt, wobei diese bei der vorgesehenen Drehrichtung 38 der Trennscheibe 24 seitlich an der Schutzhaube 32 befestigt werden müssen, damit sie in Drehrichtung 38 schleifend an die Trennscheibe 24 angelenkt werden können. Selbstverständlich können auch die Dichtungslippen 54 entsprechend angebracht sein. Dies ist sinngemäss mit einer gestrichelten Linie 56, welche jedoch tatsächlich im Bereich der Freiräume 46 verläuft, angedeutet. Der Innenraum der Schutzhaube 32 ist mit schwebendem Schneidestaub 58 gefüllt, was mit Punkten gezeigt ist.

Auf einem in Fig. 7 angedeuteten Auflagetisch 20 mit einer Auflagefläche 19 und einer Unterseite 21 aus einem Metallrost mit längslaufenden Latten ist ein plattenförmiges Werkstück 60 aufgelegt. Dieses wird von der Trennscheibe 24 zugeschnitten. Die Trennscheibe 24 ist im Bereich der Schneidezähne 34 (Fig. 3) mit einem harten, abriebfesten Werkstoff beschichtet, wobei diese Schichten 36 breiter ausgebildet sind als der innere Bereich der Trennscheibe 24. Der Umfang der Trennscheibe 24 liegt um den Abstand b von vorliegend 3 mm tiefer als die Unterseite 21 des Auflagetischs 20.

Nach einer nicht dargestellten Ausführungsform kann der Auflagetisch 20 auch geschlossen ausgebildet sein, d.h. die Latten bzw. Bretter liegen direkt aneinander, es ist lediglich eine längslaufende Öffnung 66 für die Trennscheibe 24 ausgebildet.

Im Arbeitsbereich A ist unterhalb des Auflagetischs 20 eine längslaufende, etwa halbzylinderförmige Staubwanne 62 befestigt, in welcher mittels eines gestrichelt angedeuteten Unterdruckschlauchs 48 ein Unterdruck angelegt wird. Dieser Unterdruckschlauch 48 ist über einen Absaugstutzen analog Fig. 4 stirnseitig angebracht und entfernt den in die Staubwanne 62 fallenden bzw. gesaugten Schneidestaub 58. Der Querschnitt ist wesentlich kleiner als bei Wasserauffangbecken von Nassschneidern. Bei einem Lattenrost darf er sich nur über eine allenfalls breiter ausgebildete Latte erstrecken. Der Auflagetisch 20 ist daher bevorzugt als Kunststoffplatte ausgebildet.

In der Staubwanne 62 ist der Aufbau eines Unterdrucks schwieriger als in der Schutzhaube 32 (Fig. 6) weil die längslaufende Öffnung 66 in der Staubwanne nur über einen geringen Teil von der Trennscheibe 24 verschlossen ist. In der Praxis wird deshalb bei der Staubwanne 62 eine grössere Saugleistung vorgesehen, was bei einem gemeinsamen Industriestaubsauger 52 (Fig. 4) durch Unterdruckschläuche 48 verschiedenen Durchmessers erreicht wird.

In Fig. 8 wird wie in Fig. 7 ein plattenförmiges Werkstück 60 gezeigt, welches jedoch nicht vollständig durchtrennt ist, sondern eine sich über den grössten Teil der Dicke erstreckende Nut 64 aufweist und eine Soll-Bruchstelle bildet. Die Werkstücke 60 können aus einem beliebigen harten Baustoff bestehen, in der Praxis werden insbesondere Verbundsteine, Leca-Steine, Zementsteine, Kalksandsteine, Backsteine, Ziegel und Ziegelsteine geschnitten.

In den Fig. 9 bis 11 werden erfindungsgemässe Ausführungsformen einer Staubwanne 62 dargestellt.

Die in Fig. 9 dargestellte Staubwanne 62 zeigt einen in Längsrichtung verschiebbaren Auflagetisch 20 . In der Arbeitsphase wird der Auflagetisch 20 in Richtung des Pfeils 68 verschoben. Auf der Unterseite 21 ist eine Staubwanne 62 befestigt, welche einen in Richtung des Absaugstutzens 70 kontinuierlich zunehmenden Querschnitt hat. Einige beispielhafte und typische Querschnittsformen der Staubwanne 62 sind in Fig. 10, als Varianten a), b) und c), dargestellt. Selbstverständlich bleibt die Querschnittsform auch bei ändernden Dimensionen über die ganze Länge des Auflagetischs 20 dieselbe. Durch Versuchsreihen wird die optimale Geometrie der Staubwanne 62 festgestellt.

In der Draufsicht auf den Auflagetisch 20 gemäss Fig. 11 ist die längslaufende Öffnung 66 für die fehlende Trennscheibe 24 (Fig. 3) dargestellt. Die untenliegende Staubwanne 62 ist angedeutet. Im Bereich dieser Staubwanne 62 muss der Auflagetisch geschlossen sein, damit darin ein hinreichender Unterdruck erzeugt werden kann.

## Patentansprüche

1. Schneidmaschine (10) zum trockenen Trennen von Werkstücken (60) oder zum trockenen Einschneiden von Nuten (64) in Werkstücke (60), welche Werkstücke (60) aus Naturstein, Kunststein oder Keramik bestehen, mit einer Maschine (10), welche eine motorisch angetriebene Trennscheibe (24) mit einer Schutzhaube (32) im Arbeitsbereich (A), einem Auflagetisch (20) für das Werkstück (60) und eine Staubwanne (62) zum Sammeln und Entfernen des Schneidestaubs (58) umfasst, wobei in der Staubwanne (62), welche unterhalb einer längslaufenden Öffnung (66) für die Trennscheibe (24) im Auflagetisch (20) angeordnet ist Mittel zur Erzeugung eines Unterdrucks und zum Absaugen, Trennen und Sammeln von Schneidestaub (58) angeordnet sind, wobei der Querschnitt (Q) der Staubwanne (62) in Längsrichtung der Öffnung (66) zu einem stirnseitig angeordneten Absaugstutzen (70) kontinuierlich vergrössert ausgebildet ist
**dadurch gekennzeichnet, dass**
die längslaufende Öffnung (66) der Staubwanne (62) einen Abstand (a) von höchstens der Hälfte von der Dicke (d) der Trennscheibe (24) an der breitesten Stelle haben und die Staubwanne (62) in der Grundform eines liegenden Kegel- oder Pyramidenstumpfes mit parallel zur horizontal verlaufenden Längsachse abgeschnittenen oberen Teil ausgebildet ist.

2. Schneidmaschine (10) nach Anspruch 1, **dadurch gekennzeichnet, dass** der Abstand (a) höchstens einen Viertel der maximalen Dicke (d) ausmacht, wobei die Dicke (d) vorzugsweise 3 bis 8 mm, und der Abstand (a) 0,5 bis 2 mm beträgt.

3. Schneidmaschine (10) nach Anspruch 1 oder 2, **dadurch gekennzeichnet, dass** die längslaufende Öffnung (66) von einem Dichtungsmedium, insbesondere einem Dichtungsblech (42) begrenzt ist, welches im Extremfall auf der Trennscheibe (24) schleift.

4. Schneidmaschine (10) nach Anspruch 3, **dadurch gekennzeichnet, dass** die mechanischen Mittel an der Trennscheibe (24) schleifende Bürsten oder Dichtungslippen (54) sind, vorzugsweise nur innerhalb der Schneidezähne (34) angeordnet.

5. Schneidmaschine (10) nach einem der Ansprüche 1 bis 4, **dadurch gekennzeichnet, dass** der Auflagetisch (20) als manuell oder maschinell längsverschiebbarer Rolltisch mit einem geschlossenen Plankenrost oder als geschlossene Auflageplatte ausgebildet ist.

6. Schneidmaschine (10) nach einem der Ansprüche 1 bis 5, **dadurch gekennzeichnet, dass** die Trennscheibe (24) höhenverstellbar ist, manuell oder maschinell, letzteres auch programmgesteuert, und deren Umfang die untere Begrenzungsfläche des Plankenrostes oder der Auflageplatte erreicht oder von dieser einen Abstand (b) von bis etwa 10 mm, insbesondere bis etwa 5 mm hat.

## Claims

1. Cutting machine (10) for the dry severing of workpieces (60) or for the cutting of grooves (64) into workpieces (60), which workpieces (60) consist of natural stone, artificial stone or ceramic, comprising a machine (10), which comprises a motor-driven cutter disc (24) with a protection hood (32) in the working region (A), a support table (20) for the workpiece (60) and a dust trough (62) for collecting and removing the cutting dust (58), wherein means for generating a reduced pressure and for sucking up, separating and collecting cutting dust (58) are arranged in the dust trough (62), which is arranged below a longitudinal opening (66) for the cutting disc (24) in the support table (20), wherein the cross-section (Q) of the dust trough (62) in the longitudinal direction of the opening (66) is continuously enlarged to a suction connection (70) which is arranged on the end face, **characterised in that** the longitudinal opening (66) of the dust trough (62) has a spacing (a) of at most half thickness (d) of the cutting disc (24) at the widest point and the dust trough (62) is configured in the basic shape of a horizontal truncated cone or truncated pyramid with an upper part cut off parallel to the horizontally extending longitudinal axis.

2. Cutting machine (10) according to claim 1, **characterised in that** the spacing (a) makes up at most a quarter of the maximum thickness (d), the thickness (d) preferably being 3 to 8 mm, and the spacing (a) 0.5 to 2 mm.

3. Cutting machine (10) according to claim 1 or 2, **characterised in that** the longitudinal opening (66) is limited by a sealing medium, in particular a sealing plate (42), which, in the extreme case, slides on the cutting disc (24).

4. Cutting machine (10) according to claim 3, **characterised in that** the mechanical means are brushes or sealing lips (54) sliding on the cutting disc (24), preferably only arranged inside the cutting teeth (34).

5. Cutting machine (10) according to any one of claims 1 to 4, **characterised in that** the support table (20) is configured as a manually or mechanically longitudinally displaceable roller table (20) with a closed plank grid or as a closed support board.

6. Cutting machine (10) according to any one of claims 1 to 5, **characterised in that** the cutting disc (24) is height-adjustable, manually or mechanically, the latter also in a program-controlled manner, and the periphery thereof reaches the lower limiting face of the plank grid or the support board or has a spacing (b) therefrom of up to about 10 mm, in particular up to about 5 mm.

## Revendications

1. Machine de coupe (10) pour couper à sec des pièces à usiner (60) ou pour ménager à sec des rainures (64) dans des pièces à usiner (60), ces pièces à usiner (60) se composant de pierre naturelle, de pierre artificielle ou de céramique, au moyen d'une machine (10) qui comprend une meule tronçonneuse motorisée (24) comportant un capot de protection (32) dans la zone de travail (A), un plateau (20) pour la pièce à usiner (60) et un carter (62) à poussières pour collecter et enlever les poussières de coupe (58), dans laquelle des moyens tant de génération d'une dépression, que d'aspiration, de séparation et de collecte des poussières de coupe (58) sont agencés dans le carter (62) à poussières qui est monté au-dessous d'une ouverture (66) de tracé longitudinal ménagée dans le plateau (20) pour la meule tronçonneuse (24), et dans laquelle la configuration de la section transversale (Q) du carter (62) à poussières augmente continuellement dans la direction longitudinale de l'ouverture vers un piquage d'aspiration (70) agencé frontalement,
**caractérisée en ce que**
la distance (a) entre les bords de l'ouverture (66) de tracé longitudinal du carter (62) à poussières est au maximum égale, à son emplacement le plus large, à la moitié de l'épaisseur (d) de la meule tronçonneuse (24), et la forme de base du carter (62) à poussières consiste en un tronc de cône ou de pyramide dont la partie supérieure est tronquée parallèlement à l'axe longitudinal de tracé horizontal.

2. Machine de coupe (10) selon la revendication 1, **caractérisée en ce que** la distance (a) est égale au maximum à un quart de l'épaisseur maximale (d), et **en ce que** l'épaisseur (d) est de préférence de 3 à 8 mm et la distance (a) de préférence de 0,5 à 2 mm.

3. Machine de coupe (10) selon la revendication 1 ou 2, **caractérisée en ce que** l'ouverture (66) de tracé longitudinal est limitée par un moyen d'étanchéité, en particulier une tôle d'étanchéité (42), qui frotte, dans un cas extrême, sur la meule tronçonneuse (24).

4. Machine de coupe (10) selon la revendication 3, **caractérisée en ce que** les moyens mécaniques sur la meule tronçonneuse (24) sont des brosses de frottement ou des lèvres d'étanchéité (54), qui ne sont de préférence agencées que dans la zone qui est en deçà des dents de coupe (34).

5. Machine de coupe (10) selon l'une quelconque des revendications précédentes, **caractérisée en ce que** le plateau (20) consiste, soit en une table à galets mobile manuellement ou mécaniquement dans le sens longitudinal, à grille en planches fermée, soit en une plaque de support fermée.

6. Machine de coupe (10) selon l'une quelconque des revendications précédentes, **caractérisée en ce que** la meule tronçonneuse (24) est réglable en hauteur, manuellement ou mécaniquement, éventuellement par commande programmée dans ce dernier cas, et **en ce que** sa périphérie atteint la surface limite inférieure de la grille en planches ou de la plaque de support, ou est espacée de celle-ci, d'une distance (b) pouvant atteindre environ 10 mm, en particulier environ 5 mm.
